# EUROPEAN PATENT APPLICATION

(11) **EP 3 432 410 A1**
(43) Date of publication of application: **23.01.2019**
(21) Application number: 16894359.5
(22) Date of filing: 15.03.2016
(51) Int. Cl.: H01M 10/48, H02H 7/18, H02J 7/00

(54) **STORAGE BATTERY DEVICE AND VEHICLE**

(71) Applicant: Kabushiki Kaisha Toshiba, Minato-ku Tokyo 105-8001 (JP); Toshiba Infrastructure Systems & Solutions Corporation, Kawasaki-shi, Kanagawa 212-0013 (JP)
(72) Inventor: KONDO, Atsumi, Tokyo 105-8001 (JP); HAGIWARA, Keizo, Tokyo 105-8001 (JP); YAMAMOTO, Masaaki, Tokyo 105-8001 (JP); KURODA, Kazuto, Tokyo 105-8001 (JP); SEKINO, Masahiro, Tokyo 105-8001 (JP)
(74) Representative: AWA Sweden AB
(86) International application number: PCT/JP2016/058208
(87) International publication number: WO 2017/158741

(57) **Abstract**

A storage battery apparatus according to an embodiment, includes an output terminal TO; a switch 40 which switches an output state of the output terminal TO; a battery module MDL which outputs temperature information of a battery cell embedded therein; a contactor 12p, 12n which electrically connects a main circuit and the battery module MDL; a battery management unit which compares a temperature of the battery cell based on the temperature information of the battery cell and a first over-temperature threshold, opens the contactor 12p, 12n and switches the output state of the output terminal TO, when the temperature of the battery cell is equal to or higher than the first over-temperature threshold; and a safety supervisor unit 12 which compares a temperature of the battery cell based on the temperature information of the battery cell with a second over-temperature threshold, opens the contactor 12p, 12n when the temperature of the battery cell is equal to or higher than the second over-temperature threshold, and switches the output state of the output terminal TO, wherein the first over-temperature threshold is lower than the second over-temperature threshold.

## Description

### FIELD

Embodiments described herein relate generally to a storage battery apparatus and a vehicle.

### BACKGROUND

In recent years, the storage battery apparatus is applied in various fields for the improvement of utilization efficiency by using stored power in an attempt to conserve energy.

In particular, the application in a large storage battery apparatus with higher voltage and higher power content is desired since the effect of energy conservation is significant in mass transport vehicles such as railways etc.

### CITATION LIST

### PATENT LITERATURE

Patent Literature 1: Jpn. Pat. Appln. KOKAI Publication No. 2013-187159

### SUMMARY

### TECHNICAL PROBLEM

The storage battery apparatus is arranged in the underfloor or inside the vehicle body when mounted on the vehicle. The storage battery apparatus is a high energy body and it is very dangerous if a fire occurs. Therefore, a structure of the storage battery apparatus with higher reliability equipped with additional fail-safe mechanisms is desired from a safety perspective.

The embodiment of the present invention has the purpose of providing the storage battery apparatus and the vehicle capable of detecting signs of fire and reliably ensuring safety.

### SOLUTION TO PROBLEM

A storage battery apparatus according to a present embodiment, comprises an output terminal; a switch which switches an output state of the output terminal; a battery module which outputs temperature information of a battery cell embedded therein; a contactor which electrically connects a main circuit and the battery module; a battery management unit which compares a temperature of the battery cell based on the temperature information of the battery cell and a first over-temperature threshold, opens the contactor when the temperature of the battery cell is equal to or greater than the first over-temperature threshold, and switches the output state of the output terminal; and a safety supervisor unit which compares a temperature of the battery cell based on the temperature information of the battery cell with a second over-temperature threshold, opens the contactor and switches the output state of the output terminal, when the temperature of the battery cell is equal to or greater than the second over-temperature threshold, wherein the first over-temperature threshold is lower than the second over-temperature threshold.

### BRIEF DESCRIPTION OF THE DRAWINGS

FIG. 1 is a schematic block diagram showing the structural example of the storage battery apparatus and the vehicle of the first embodiment.
FIG. 2 is a schematic block diagram showing the structural example of the storage battery apparatus and the vehicle of the second embodiment.

### DETAILED DESCRIPTION

Embodiments of the present invention will be described in detail with reference to the accompanying drawings.

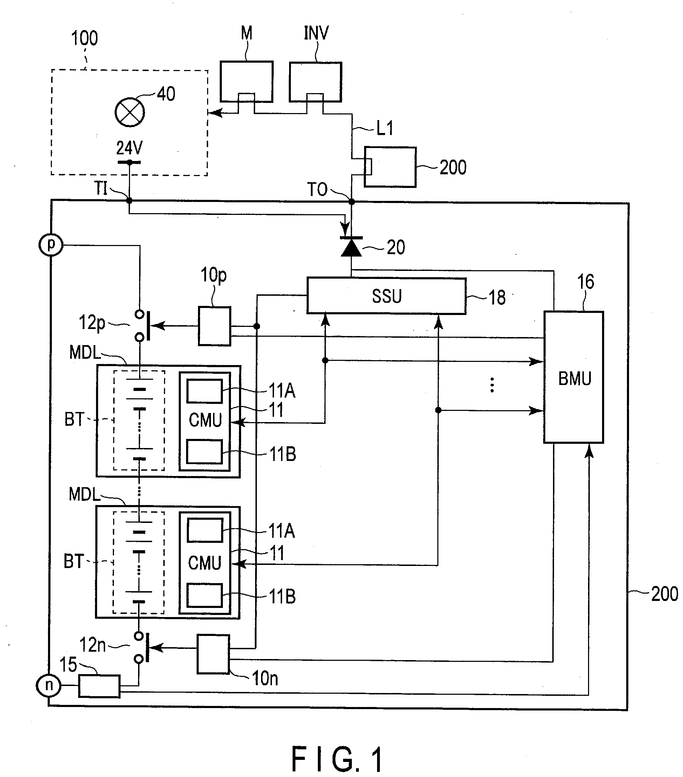

FIG. 1 is a schematic block diagram illustrating the configuration of the storage battery apparatus and the vehicle of the first embodiment.

The vehicle of the present embodiment includes an inverter INV, a motor M, a cab 100, a storage battery apparatus 200 and a fire detection line (signal line) L1. The vehicle of the present embodiment includes at least one storage battery apparatus 200, and may include a plurality of the storage battery apparatuses 200. The plurality of battery apparatuses 200 have a similar structure. Thus, the following explanation will be explained by referring to the drawing regarding only one storage battery apparatus 200 and the explanation regarding other storage battery apparatuses 200 will be omitted.

The cab 100 includes a fire detection indicator (signal light) 40. The fire detection indicator light 40 is electrically connected to one end of a power source supply line (fire detection line L1). Another end of the fire detection line L1 is electrically connected to a 24V voltage supply source which is a power source voltage of the cab 100.

The fire detection line L1 is a signal line that extends in a loop shape from the cab 100 via a mounting apparatus such as the storage battery apparatus 200, the inverter INV, and the motor M, etc. In a normal state, both ends of the fire detection line L1 is in a conducted state. When fire is detected in the mounting apparatus such as the storage battery apparatus 200, the inverter INV, or the motor M, etc. , one end and another end of the fire detection line L1 become a non-conductive state and a voltage of a fire detection indicator light 40 side of the fire detection line L1 changes. The fire detection indicator light 40 flashes since the output state (for example, voltage) of the fire detection line L1 changes.

The inverter INV, for example, is a bi-directional three-phase alternating current inverter capable of converting a direct current supplied from the storage battery apparatus 200 to an alternating current, and can also convert a regenerative current from the motor M to a direct current. The inverter INV outputs alternating current to the motor M and outputs direct current to the storage battery apparatus 200. The inverter INV is equipped with a fire detector (not illustrated) that, when a fire is detected by the fire detector, a passing power source supply line is electrically disconnected.

The motor M is rotated by an alternating current supplied from the inverter INV. The force of the motor M is transmitted by rotation to the wheels (not illustrated) through an axis. The motor M includes a fire detector (not illustrated). When a fire is detected by the fire detector, the passing power source supply line is electrically disconnected.

The storage battery apparatus 200 includes a plurality of battery modules MDL, a battery management unit (BMU) 16, a safety supervisor unit (SSU) 18, a current sensor 14, contactors 12p and 12n, contactor drive apparatuses 10p and 10n, a relay circuit (switch) 20, an input terminal TI, and an output terminal TO. A battery module MDL respectively includes an assembled battery BT and a cell monitoring unit (CMU) 11.

A current sensor 14 is provided in a current line at a low potential side, detects an output current of the storage battery apparatus 200, and outputs detected information to the battery management unit 16 and the safety supervisor unit 18.

The contactor 12p is provided on a high potential side current line extending between a positive electrode terminal of the battery module MDL of a highest potential side and a high potential side external output terminal (p) . The contactor 12n is provided on a low potential side current line extending between a negative electrode terminal of the battery module MDL of the lowest potential side and a low potential side external output terminal (n). The contactors 12p and 12n include a normally open contact, and are closed when the battery module MDL charges or discharges.

The contactor drive apparatus 10p drives the contactor 12p in response to a signal from the battery management unit 16 and the safety supervisor unit 18. The contactor drive apparatus 10n drives the contactor 12n in response to a signal from the battery management unit 16 and the safety supervisor unit 18.

The battery management unit 16 is configured to be communicable between the non-illustrated upper control apparatus and the cell monitoring unit 11, and a relay circuit 20 and the connector drive apparatuses 10p and 10n are controlled in response to the signal from the upper control apparatus, the current sensor 14, and the cell monitoring unit 11. The battery management unit 16 performs calculations etc. of SOC (state of charge) or SOH (stage of health) for each assembled battery BT (or each battery cell) by using information of voltage and temperature received from the cell monitoring unit 11 and a value based on information of current received from the current sensor 14. The battery management unit 16 performs safety supervision of battery cells from the information of voltage and temperature received from the cell monitoring unit 11, and information of current received from the current sensor 14. The battery management unit 16 includes for example, a processor such as an MPU (Micro Processing Unit), etc. and a memory.

The safety supervisor unit 18 is configured to be communicable with the battery module MDL and controls the operations of the relay circuit 20 and the contactor drive apparatuses 10p and 10n. The safety supervisor unit 18 performs safety supervision of the battery cells from information of voltage and temperature received from the cell monitoring unit 11. The safety supervisor unit 18 is provided separately from the battery management unit 16 and is configured to perform safety supervision of the battery cells even if the battery management unit 16 does not operate normally. The safety supervisor unit 18 includes for example, a processor such as an MPU, etc. and a memory.

The relay circuit 20 switches the electrical connection of a voltage supply line (a part of the fire detection line L1) extending between an input terminal TI for inputting a signal from an exterior and an output terminal TO for outputting a signal to the exterior, and switches an output state of the output terminal TO by a temperature detection state in the cell monitoring unit 11.

The relay circuit 20 switches the electrical connection of the power source supply line (a part of the fire detection line L1) extending from the cab 100 via the relay circuit 20. Thus, the output state of the output terminal TO can be switched by the relay circuit 20. The operation of the relay circuit 20 is controlled by a signal driven by a 12V power source in the storage battery apparatus 200. The connection of a 24V power source signal supplied from the cab 100 to the power source supply line is switched based on the temperature detection state in the cell monitoring unit 11.

The contact is normally closed in the relay circuit 20 and the contact is opened when a control signal based on an over-temperature state from the battery management unit 16 and the safety supervisor unit 18 is received so that the power source supply line will be in a non-conductive state.

The assembled battery BT includes a plurality of battery cells connected in parallel or in series. The battery cell is for example, a secondary battery cell such as a lithium ion battery and a nickel hydrogen battery, etc.

The cell monitoring unit 11 is controlled by the battery management unit 16 and monitors the voltage of a plurality of battery cells and temperature near the assembled battery BT. The cell monitoring unit 11 is configured to be communicable between the safety supervisor unit 18 and is for example, configured to be communicable with the cell monitoring unit 11 of an adjacent battery module MDL.

The operation of the cell monitoring unit 11 is controlled by the battery management unit 16, monitors the assembled battery BT, and notifies the monitoring results to the battery management unit 16 and safety supervisor unit 18. The cell monitoring unit 11 includes a temperature detection circuit 11A, a voltage detection circuit 11B, a non-illustrated MPU, and a memory.

The temperature detection circuit 11A includes a temperature sensor for detecting temperature near the plurality of battery cells, and notifies the temperature of the plurality of battery cells to the battery management unit 16 and the safety supervisor unit 18. The temperature detection circuit 11A should detect temperature from at least one place near the plurality of battery cells, and there is no need to detect temperature near all of the battery cells. The value based on temperature information output from the temperature detection circuit 11A is supplied to the battery management unit 16 and safety supervisor unit 18 from respective temperature detection circuit 11A.

The voltage detection circuit 11B includes a voltage sensor for detecting positive electrode terminal voltage and negative electrode terminal voltage of the plurality of battery cells. The voltage of each of the plurality of battery cells (difference between the positive electrode terminal voltage and the negative electrode terminal voltage) is notified to the battery management unit 16 and the safety supervisor unit 18. In addition, the voltage detection circuit 11B can notify the positive electrode terminal voltage and negative electrode terminal voltage detected by a voltage detection means to the battery management unit 16 and safety supervisor unit 18. The voltage value output from the voltage detection circuit 11B is supplied from its respective voltage detection circuit 11B to the safety supervisor unit 18.

The battery management unit 16 compares each value based on the temperature information notified from a plurality of temperature detection circuits 11A with a predetermined threshold (a first over-temperature threshold) to determine whether the assembled battery BT (or individual battery cells) of each of the battery modules MDL is in an over-temperature state or not.

When the temperature based on temperature information notified from the temperature detection circuit 11A is equal to or higher than a predetermined threshold (first over-temperature threshold), the battery management unit 16 determines the assembled battery BT (or individual battery cells) is in an over-temperature state, opens the contactor 12p and 12n by the contactor drive apparatus lOp and 10n to electrically disconnect the plurality of battery modules MDL from a main circuit, opens a contact of the power source supply line from the cab 100 by the relay circuit 20 so that the power source supply line will be in a non-conductive state to switch the output state of the output terminal TO.

The battery management unit 16 compares each of the values based on voltage information notified from a plurality of voltage detection circuits 11B with a predetermined threshold (first over-charge threshold) to determine whether the assembled battery BT (or individual battery cells) of each of the battery modules MDL is in an over-charge state.

When the voltage notified from the voltage detection circuit 11B is equal to or higher than a predetermined threshold (the first over-charge threshold), the battery management unit 16 determines the assembled battery BT (or individual battery cells) is in an over-charge state, opens the contactors 12p and 12n by the contactor drive apparatus 10p and 10n to electrically disconnect the plurality of battery modules MDL from the main circuit, and opens the contact of the power source supply line from the cab 100 by the relay circuit 20 so that the power source supply line will be in a non-conductive state to switch the output state of the output terminal TO.

The battery management unit 16 compares each of the value based on voltage information notified from the plurality of voltage detection circuit 11B with a predetermined threshold (first over-discharge threshold) to determine whether or not the assembled battery BT (or individual battery cells) of each of the battery modules MDL is in an over-discharge state.

When the voltage based on voltage information notified from the voltage detection circuit 11B is equal to or lower than the predetermined threshold (first over-discharge threshold), the battery management unit 16 determines the assembled battery BT (or individual battery cells) is in an over-discharge state, opens the contactors 12p and 12n by the contactor drive apparatus 10p and 10n to electrically disconnect the plurality of battery modules MDL from the main circuit, and opens the contact of the power source supply line from the cab 100 by the relay circuit 20 so that the power source supply line will be in a non-conductive state to switch the output state of the output terminal TO.

The safety supervisor unit 18 compares each of the values based on temperature information notified from the plurality of temperature detection circuits 11A with a predetermined threshold (second over-temperature threshold) so as to determine whether or not the assembled battery BT (or individual battery cells) of each of the battery modules MDL is in an initial stage of fire.

When the temperature based on the temperature information notified from the temperature detection circuit 11A is equal to or higher than a predetermined threshold (second over-temperature threshold), the safety supervisor unit 18 determines the assembled battery BT (or individual battery cells) is in an initial stage of fire, opens contactors 12p and 12n by the contactor drive apparatus 10p and 10n to electrically disconnect the plurality of battery modules MDL from the main circuit, opens the contact of the power source supply line from the cab 100 by the relay circuit 20 so that the power source supply line will be in a non-conductive state to switch an output state of the output terminal TO.

The safety supervisor unit 18 compares each of the values based on voltage information notified from a plurality of voltage detection circuit 11B with a predetermined threshold (second over-charge threshold) to determine whether the assembled battery BT (or individual battery cells) of each of the battery modules MDL is in an over-charge state.

When the voltage notified from the voltage detection circuit 11B is equal to or higher than the predetermined threshold (second over-charge threshold), the safety supervisor unit 18 determines the assembled battery BT (or individual battery cells) is in an over-charge state, opens contactors 12p and 12n by the contactor drive apparatus 10p and 10n to electrically disconnect the plurality of battery modules MDL from the main circuit, opens the contact of the power source supply line from the cab 100 by the relay circuit 20 so that the power source supply line will be in a non-conductive state to switch the output state of the output terminal TO.

The safety supervisor unit 18 compares each of the values based on voltage information notified from the plurality of voltage detection circuit 11B with the predetermined threshold (second over-discharge threshold) to determine whether or not the assembled battery BT of each of the battery modules MDL is in an over-discharge state.

When the voltage notified from the voltage detection circuit 11B is equal to or less than the predetermined threshold (second over-discharge threshold), the safety supervisor unit 18 determines that the assembled battery BT (or individual battery cells) is in an over-discharge state, opens the contactors 12p and 12n by the contactor drive apparatus 10p and 10n to electrically disconnect the plurality of battery modules MDL from the main circuit, opens the contact of the power source supply line from the cab 100 by the relay circuit 20 so that the power source supply line will be in a non-conductive state to switch the output state of the output terminal TO.

The first over-temperature threshold is a maximum value of an operation temperature of the battery cell during normal use, and the second over-temperature threshold is a temperature of a battery cell in an initial fire stage which is the maximum value of an operation temperature of safely using the battery cell. Therefore, the first over-temperature threshold is a value lower than the second over-temperature threshold.

In addition, the first over-charge threshold is a maximum value of an operation voltage of the battery cell during normal use, and the second over-charge threshold is a maximum value of an operation voltage of safely using the battery cell. The first over-discharge threshold is a minimum value of the operation voltage of the battery cell during normal use and the second over-discharge threshold is a minimum value of the operation voltage of safely using the battery cell. Therefore, the first over-charge threshold is a value smaller than the second over-charge threshold and the first over-discharge threshold is a value larger than the second over-discharge threshold.

In the present embodiment, the second over-temperature threshold is a maximum value of the operation temperature of battery module MDL and is a temperature between the first over-temperature threshold and the minimum temperature in which the battery cell is in a thermal runaway state. By the above, it is possible to detect an initial stage of fire started with heat generated by the battery cell and to prevent fire caused by thermal runaway of the battery cell.

The maximum value of the operation temperature of the battery module MDL is decided by electrochemical characteristics of the loaded battery cell, and it is preferable to be set for example, equal to or less than 100°C. The actual temperature for causing ignition of a battery cell is, for example, equal to or higher than 200°C, and the second over-temperature threshold is set to be a temperature considerably lower than a temperature that ignites the battery cell. Therefore, the fire of the storage battery apparatus 200 can be prevented. To detect the internal ignition phenomenon of a battery cell at the initial stage is effective from the perspective of preventing a fire caused by battery cells since the time constant of the temperature change characteristic of the battery cell is very long. Furthermore, the second over-temperature threshold is not limited to 100°C and it is preferably set to a suitable value depending on the characteristics of the battery cells mounted on the battery module MDL.

Normally, the battery management unit 16 opens contactors 12p and 12n to disconnect the plurality of battery modules MDL from the main circuit when the assembled battery BT (or battery cell) is at a temperature equal to or higher than a maximum operation temperature (first over-voltage threshold) in normal use. Therefore, the battery module MDL will not cause a fire in state controlled by the battery management unit 16.

However, if the temperature of the battery cell constituting the assembled battery BT reaches near 100°C due to some abnormality in the battery management unit 16 or other parts, there is a possibility that the storage battery apparatus 200 does not function normally. In other words, by detecting the state where the temperature of the battery cell reaches near 100°C, the state that the storage battery apparatus 200 does not function normally can be detected.

In the storage battery apparatus and the vehicle of the present embodiment, an abnormality of the storage battery apparatus 200 is detected by the battery management unit 16 and separately provided safety supervisor unit 18, and safety is further ensured by notifying signs of fire to the cab 100 by the fire detection indicator light 40 at a temperature sufficiently lower than 200°C which is the temperature at which the battery cell ignites.

More specifically, in the storage battery apparatus and the vehicle of the present embodiment, the safety supervisor unit 18 disconnects the electrical connection of the power supply line by the relay circuit 20 when the temperature supplied from the battery module MDL is equal to or higher than the second temperature threshold. The fire detection indicator light 40 lights up depending on the output state of the output terminal TO. That is, the fire detection indicator light 40 lights up upon the change of the voltage of the power source supply line. Simultaneously, the safety supervisor unit 18 opens the contactors 12p and 12n and disconnects the plurality of battery modules MDL from the main circuit. Therefore, the driver of the vehicle will know that the vehicle is in an initial fire stage by the lighting of the fire detection indicator light 40 and can respond early to the fire to ensure safety.

In other words, the present embodiment provides the storage battery apparatus and the vehicle capable of detecting signs of fire and reliably ensuring safety.

Next, a storage battery apparatus and a vehicle of the second embodiment are explained in detail by reference to the accompanying drawings.

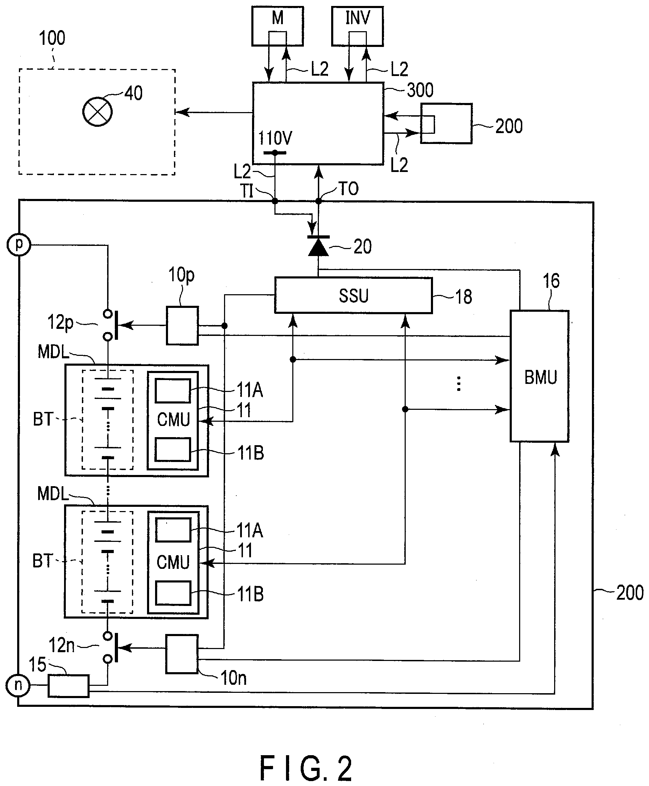

FIG.2 is a schematic block diagram showing the structural example of the storage battery apparatus and the vehicle of the second embodiment. The explanation of the storage battery apparatus 200 of the present embodiment is omitted since the storage battery apparatus 200 of the present embodiment has a similar structure as the storage battery apparatus 200 of the first embodiment. A path for notifying a fire to the fire detection indicator light 40 from the storage battery apparatus 200 is different in the present embodiment from the first embodiment.

The vehicle of the present embodiment includes the inverter INV, the motor M, the cab 100, the storage battery apparatus 200, a vehicle driving main circuit 300 and a fire detection line L2. The vehicle of the present embodiment includes at least one storage battery apparatus 200, and may include a plurality of the storage battery apparatuses 200.

The vehicle driving main circuit 300 is driven by a power source voltage of, for example, 110V. The fire detection line (signal line) L2 extends in a loop shape via an input terminal TI and an output terminal TO of the storage battery apparatus 200 from the vehicle driving main circuit 300. The vehicle driving main circuit 300 supplies power source voltage of 110V to a relay circuit 20 of the storage battery apparatus 200 via the fire detection line L2.

The vehicle driving main circuit 300 includes a comparator for comparing a voltage of the power source supply line with a predetermined threshold (for example 110V) and supplies a fire detection signal to the fire detection indicator light 40 when the difference between the voltage of the power source supply line and a predetermined threshold becomes equal to or greater than a predetermined value.

The relay circuit 20 switches the connection of the voltage supply line (a part of the fire detection line L2) extending from the vehicle driving main circuit 300. The contact is normally closed in the relay circuit 20 and the contact is opened when a control signal based on an over-temperature state from the battery management unit 16 and the safety supervisor unit 18 is received so that the power source supply line (a part of the fire detection line L2) will be in a non-conductive state.

Similarly, the fire detection line L2 is extending in a loop shape between the vehicle driving main circuit 300 and the inverter INV and between the vehicle driving main circuit 300 and the motor M. The vehicle driving main circuit 300 detects fire of the inverter INV and the motor M by the voltage of the fire detection line L2. The vehicle driving main circuit 300 compares voltage of the fire detection line L2 extending from the inverter INV and fire detection line L2 extending from the motor M with a predetermined threshold (for example, 110V), and supplies a fire detection signal to the fire detection indicator light 40 when the difference is equal to or greater than a predetermined value.

The fire detection indicator light 40 lights up when the fire detection signal is received from the vehicle driving main circuit 300.

As can be seen from the above, the storage battery apparatus 200 and the vehicle of the present embodiment can detect signs of fire of the storage battery apparatus 200 and can obtain an effect similar to the aforementioned first embodiment. In other words, the present embodiment provides the storage battery apparatus and the vehicle capable of detecting signs of fire and reliably ensuring safety.

In the above mentioned second embodiment, the storage battery apparatus 200, the inverter INV and the motor M are independently provided in the vehicle driving main circuit 300, but may be provided integrally on the control board of the vehicle-mounted equipment. The vehicle driving main circuit 300 for example, can be integrally provided with the control board of the inverter INV and can be formed inside the inverter INV. Even in such case, an effect similar to the above second embodiment can be achieved.

In the first embodiment and the second embodiment, the contactors 12p and 12n are arranged in each of the positive electrode side and the negative electrode side of the plurality of battery modules MDL; however, there is no need to provide contactors to both sides of the positive electrode side and the negative electrode side. The contactor can be a contactor that switches connection between the main circuit with at least one side of the positive electrode side or the negative electrode side of the plurality of battery modules MDL.

While certain embodiments have been described, these embodiments have been presented by way of example only, and are not intended to limit the scope of the embodiments. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

### REFERENCE SIGNS LIST

10n: contactor driving apparatus, 10p: contactor driving apparatus, 11: cell monitoring unit (CMU), 11A: temperature detection circuit, 11B: voltage detection circuit, 12n: contactor, 12p: contactor, 14: current sensor, 16: battery management unit (BMU), 18: safety supervisor unit (SSU), 20: relay circuit (switch), 40: fire detection indicator light (indicator light), 100: cab, 200: storage battery apparatus, 300: vehicle driving main circuit, TI: input terminal, TO: output terminal, L1 and L2: fire detection line.

## Claims

1. A storage battery apparatus **characterized by** comprising:
an output terminal;
a switch which switches an output state of the output terminal;
a battery module which outputs temperature information of a battery cell embedded therein;
a contactor which electrically connects a main circuit and the battery module;
a battery management unit which compares a temperature of the battery cell based on the temperature information of the battery cell and a first over-temperature threshold, opens the contactor when the temperature of the battery cell is equal to or higher than the first over-temperature threshold, and switches the output state of the output terminal; and
a safety supervisor unit which compares a temperature of the battery cell based on the temperature information of the battery cell with a second over-temperature threshold, opens the contactor when the temperature of the battery cell is equal to or higher than the second over-temperature threshold, and switches the output state of the output terminal,
wherein the first over-temperature threshold is lower than the second over-temperature threshold.

2. A vehicle **characterized by** comprising:
a storage battery apparatus of claim 1; and
a cab which comprises an indicator light which switches a lighting state depending on an output state of an output terminal of the storage battery apparatus.
